# FASCICULE DE BREVET EUROPEEN

(11) **EP 3 080 594 B1**
(45) Date de publication et mention de la délivrance du brevet: **07.06.2023**
(21) Numéro de dépôt: 14821786.2
(22) Date de dépôt: 03.12.2014
(51) Int. Cl.: G01N 23/046

(54) **MESURE NON INTRUSIVE DE LA DENSITÉ VOLUMIQUE D'UNE PHASE DANS UNE PIECE D'UN MOTEUR D'AÉRONEF**
EINGRIFFSFREIE VOLUMENDICHTEBESTIMMUNG EINER PHASE IN EINEM FLUGZEUGMOTORTEIL
NON-INTRUSIVE MEASUREMENT OF THE VOLUME DENSITY OF A PHASE IN A PART OF AN AIRCRAFT ENGINE

(30) Priorité: 13.12.2013 FR 1362554
(43) Date de publication de la demande: 19.10.2016
(73) Titulaire: SAFRAN, 75015 Paris (FR)
(72) Inventeur: MORARD, Vincent, F-77550 Moissy-Cramayel Cedex (FR); PARRA, Estelle, F-77550 Moissy-Cramayel Cedex (FR); TOURAIS, David, F-77550 Moissy-Cramayel Cedex (FR)
(74) Mandataire: Brevalex
(86) Numéro de dépôt international: PCT/FR2014/053147
(87) Numéro de publication internationale: WO 2015/086956

(56) Documents cités:
- WO-A1-96/42022
- US-A- 5 617 461
- US-A- 6 075 871
- US-A1- 2010 278 440
- WOLTHAUS J ET AL: "Reconstruction of a time-averaged midposition CT scan for radiotherapy planning of lung cancer patients using deformable registration", MEDICAL PHYSICS, AIP, MELVILLE, NY, US, vol. 35, no. 9, 11 août 2008 (2008-08-11), pages 3998-4011, XP012116232, ISSN: 0094-2405, DOI: 10.1118/1.2966347
- PAIK D S ET AL: "SURFACE NORMAL OVERLAP: A COMPUTER-AIDED DETECTION ALGORITHM WITH APPLICATION TO COLONIC POLYPS AND LUNG NODULES IN HELICAL CT", IEEE TRANSACTIONS ON MEDICAL IMAGING, IEEE SERVICE CENTER, PISCATAWAY, NJ, US, vol. 23, no. 6, 1 juin 2004 (2004-06-01), pages 661-675, XP001238293, ISSN: 0278-0062, DOI: 10.1109/TMI.2004.826362

## Description

### DOMAINE TECHNIQUE

La présente invention concerne de manière générale un procédé non destructif de caractérisation de matériaux et plus particulièrement, la mesure de la densité volumique d'une phase distinctive dans la matière d'une pièce.

### ÉTAT DE LA TECHNIQUE ANTÉRIEURE

La sécurité et la fiabilité sont des préoccupations majeures dans plusieurs domaines industriels. A titre d'exemple, dans le domaine aéronautique les procédures de conception et production des différentes pièces d'un moteur d'aéronef font appel à différents types d'analyse et de contrôle pour garantir la fiabilité du moteur.

Concernant les aspects structurels des matériaux, ces contrôles comportent des techniques d'imagerie optique comme la tomographie. Cette dernière technique a fait l'objet de nombreuses publications et son principe consiste à construire une image volumique d'un objet à partir d'une suite d'images de différentes sections de l'objet.

On peut utiliser la technique de tomographie pour détecter puis identifier une phase spécifique ou distinctive dans le matériau du corps. En particulier, on utilise cette technique pour caractériser ou mesurer, en chaque point de l'image tomographique, le taux volumique ou la densité de la phase spécifique par rapport à un volume de référence qui est défini par avance telle que dans US 2010/278440 A1.

On notera que le terme « phase » peut désigner un défaut, une porosité, des torons, des fibres de verre, etc., dans le matériau du corps analysé.

Actuellement, on peut par exemple utiliser un logiciel du type Avizo Fire^{®} pour calculer le taux volumique de porosité dans une image tomographique. Pour tous les voxels de l'image, la mesure du taux volumique est calculée en centrant le volume de référence sur un voxel courant puis en parcourant l'ensemble de voxels appartenant à ce volume de référence pour compter le nombre de voxels indiquant des porosités. Une fois le décompte terminé, on stocke dans une image de sortie le rapport entre le volume occupé par la porosité et le volume de référence.

Toutefois, les dimensions de l'image tomographique et du volume de référence peuvent être assez importantes en fonction des besoins, rendant cette méthode inappropriée pour des contrôles en production. En effet, la complexité algorithmique dépend du produit entre le nombre N de voxels dans l'image et le nombre L de voxels dans le volume de référence. Ainsi, le temps de calcul dépend de la taille de l'image et de la taille du volume de référence en O(NL) et peut largement dépasser plusieurs heures par image.

L'objet de la présente invention est par conséquent, de remédier aux inconvénients précités en proposant un procédé et un système de mesure non intrusive de la densité volumique d'une phase distinctive dans une pièce, qui soit simple à mettre en oeuvre et qui permette de diminuer le nombre d'opérations et par conséquent d'accélérer le temps de calcul.

### EXPOSÉ DE L'INVENTION

La présente invention est définie par un procédé de mesure non intrusive de la densité volumique d'une phase spécifique dans une pièce d'un moteur d'aéronef selon la revendication 1.

Ce procédé permet de réduire au maximum la redondance des étapes de calcul et de s'affranchir de la taille du volume de référence réduisant ainsi considérablement le temps de traitement qui de plus, est indépendant du contenu de l'image.

Avantageusement, la convolution de ladite représentation matricielle initiale comporte les étapes suivantes :
- extraire chaque ligne de ladite représentation matricielle initiale suivant une première direction pour la convoluer avec ledit noyau de convolution suivant ladite première direction formant ainsi une première représentation matricielle intermédiaire,
- extraire chaque ligne de ladite première représentation matricielle intermédiaire suivant une deuxième direction pour la convoluer avec ledit noyau de convolution suivant ladite deuxième direction formant ainsi une deuxième représentation matricielle intermédiaire, et
- extraire chaque ligne de ladite deuxième représentation matricielle intermédiaire suivant une troisième direction pour la convoluer avec ledit noyau de convolution suivant ladite troisième direction formant ainsi ladite représentation matricielle résultante.

La décomposition d'une convolution 3D en trois convolutions 1D simplifie la mise en oeuvre et diminue considérablement le nombre des opérations de calcul.

Avantageusement, le procédé comporte une parallélisation des opérations d'extraction et de convolution sur les différentes lignes de chaque représentation matricielle.

La parallélisation de traitement permet d'exploiter au mieux la puissance du calculateur.

Avantageusement, chaque représentation matricielle courante parmi les représentations intermédiaires et résultante est construite en remplaçant les coefficients de la représentation matricielle précédente par des coefficients courants.

Ceci permet d'accélérer davantage le temps de calcul.

Selon un aspect de la présente invention, le noyau de convolution est un noyau moyenneur pondérant chaque coefficient d'une manière identique. Le noyau de convolution correspond à un volume de référence parallélépipédique.

L'invention vise également un système de mesure non intrusive de la densité volumique d'une phase spécifique dans une pièce d'un moteur d'aéronef selon la revendication 7.

Avantageusement, le calculateur est configuré:
pour extraire chaque ligne de ladite représentation matricielle initiale suivant une première direction pour la convoluer avec ledit noyau de convolution suivant ladite première direction formant ainsi une première représentation matricielle intermédiaire,
- pour extraire chaque ligne de ladite première représentation matricielle intermédiaire suivant une deuxième direction pour la convoluer avec ledit noyau de convolution suivant ladite deuxième direction formant ainsi une deuxième représentation matricielle intermédiaire, et
- pour extraire chaque ligne de ladite deuxième représentation matricielle intermédiaire suivant une troisième direction pour la convoluer avec ledit noyau de convolution suivant ladite troisième direction formant ainsi ladite représentation matricielle résultante.

Avantageusement, le calculateur est configuré pour paralléliser des opérations d'extraction et de convolution sur les différentes lignes de chaque représentation matricielle.

### BRÈVE DESCRIPTION DES DESSINS

D'autres caractéristiques et avantages de l'invention apparaîtront à la lecture de modes de réalisation préférentiels de l'invention faits en référence aux figures jointes parmi lesquelles :
La Fig. 1 illustre de manière schématique un exemple d'un système de tomographie 1 qui peut être utilisé pour la mise en oeuvre du procédé, selon l'invention;
La Fig. 2 est un schéma fonctionnel illustrant de manière schématique un procédé de mesure de la densité volumique d'une phase spécifique dans une pièce, selon l'invention ;
La Fig. 3 illustre de manière schématique les étapes de convolution, selon un mode de réalisation préféré de l'invention ; et
La Fig. 4 est un exemple relatif à une image bidimensionnelle illustrant le principe de convolution, selon l'invention.

### EXPOSÉ DÉTAILLÉ DE MODES DE RÉALISATION PARTICULIERS

Le principe de l'invention consiste à parcourir l'ensemble de points d'une image volumique pour y mesurer la densité volumique d'une phase spécifique tout en réduisant au maximum la redondance des données induite lors du calcul de cette mesure.

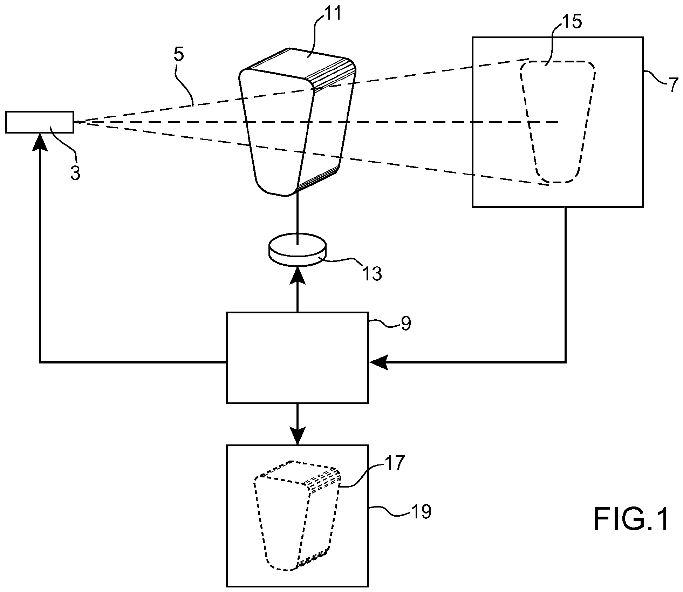

La Fig. 1 illustre de manière très schématique un exemple d'un système de tomographie 1 qui peut être utilisé pour la mise en oeuvre de l'invention.

On notera que d'autres systèmes de tomographie (tel qu'un tomographe hélicoïdal) peuvent aussi être utilisés pour mettre en oeuvre la présente invention.

Le système de tomographie de la Fig. 1 est non intrusif et comporte une source d'émission 3 de rayons lumineux 5, un détecteur 7, et un calculateur 9 couplé au détecteur 7.

Selon cet exemple, la source d'émission est destinée à émettre des rayons X sur une pièce 11 fixée sur un plateau ou support tournant 13, dans l'axe de la source d'émission soumettant ainsi la pièce à une radiographie. La source d'émission 3 des rayons X, le support tournant 13 et le détecteur 7 sont commandés par le calculateur 9. Les rayons X traversant la pièce 11 et interagissant avec elle sont capturés par le détecteur 7 mesurant l'atténuation de ce flux de rayon X. Différents tirs de rayons X sont réalisés selon différentes positions du support tournant 13 permettant au détecteur 7 de former une série d'images radiographiques 15 correspondant à une série de projections de la pièce 11.

La série des projections permet au calculateur 9 de reconstituer une image volumique 17 (ou tomographique) de la pièce 11 visualisée sur un écran 19. En effet, le calculateur 9 comporte un algorithme de reconstruction tomographique destiné à mettre en oeuvre une reconstitution d'une image volumique 17. L'algorithme de reconstruction tomographique peut être de type analytique ou algébrique utilisant par exemple des critères probabilistes tels que le maximum de vraisemblance.

L'image volumique 17 reconstituée est formée d'une grille tridimensionnelle de voxels dont les valeurs sont proportionnelles à la densité de matière. On notera qu'un voxel est un pixel tridimensionnel représentant la plus petite unité de volume. Ainsi, les valeurs des voxels peuvent indiquer la disposition d'une éventuelle phase spécifique dans des zones correspondantes de la pièce.

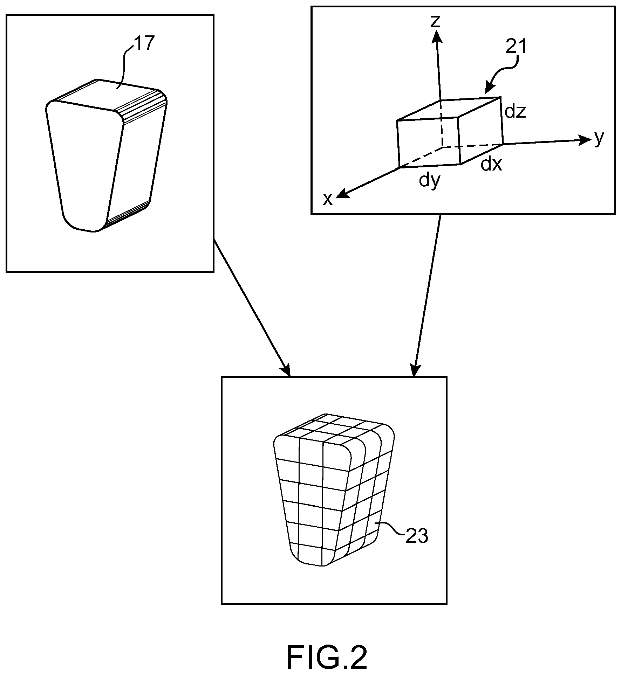

La Fig. 2 est un schéma fonctionnel illustrant de manière schématique un procédé de mesure de la densité volumique d'une phase spécifique dans une pièce, selon l'invention.

Les entrées de ce procédé comportent une image volumique 17 ainsi qu'un volume de référence 21 prédéterminé. Ce dernier est de forme parallélépipédique et est destiné à être utilisé comme référence pour définir la densité de la phase spécifique.

La sortie de ce procédé comporte une carte 23 de densité volumique de même dimension que l'image volumique d'entrée. Autrement dit, les voxels de l'image volumique forment une relation bijective avec les points de la carte 23.

Ainsi, conformément à l'invention, le calculateur 9 est configuré pour caractériser la phase spécifique dans la pièce 11 inspectée en définissant en chaque point de la carte 23, la densité de la phase spécifique par rapport au volume de référence 21 tout en s'affranchissant de la taille de ce dernier.

Le calculateur 9 est configuré pour associer un coefficient binaire à chaque voxel de l'image volumique 17 construisant ainsi une représentation matricielle tridimensionnelle initiale de coefficients binaires. Ces coefficients binaires sont représentatifs d'une présence ou d'une absence de la phase spécifique inspectée dans les zones de la pièce correspondant aux voxels.

Le calculateur 9 est configuré pour convoluer la représentation matricielle initiale avec un noyau matriciel de convolution correspondant au volume de référence 21 prédéterminé. Ainsi, pour chaque coefficient de la matrice on peut calculer la somme des valeurs de coefficients voisins pondérée par le noyau de convolution. La convolution est réalisée en opérant une composition de trois convolutions monodimensionnelles successives suivant trois directions indépendantes x, y, z formant ainsi une représentation matricielle résultante dont chaque coefficient résultant représente le taux volumique (densité) de la phase spécifique dans le volume de référence 21. La décomposition de la convolution selon trois directions indépendantes permet de minimiser la redondance et de s'affranchir de la taille du volume de référence 21 et même d'être indépendant du contenu de l'image volumique 17. Ainsi, le nombre d'étapes de calcul selon la présente invention est en O(N) et donc très réduit par rapport à la technique de l'état de l'art dont la complexité algorithmique est en O(NL), N étant le nombre de voxels de l'image volumique et L le nombre de voxels du volume de référence.

Le calculateur 9 comporte un programme d'ordinateur comprenant des instructions de code adaptées à la mise en oeuvre du procédé d'identification, selon l'invention. On notera que le calculateur 9 pour la reconstruction de l'image volumique et pour l'identification de la phase spécifique correspond à une même unité de traitement.

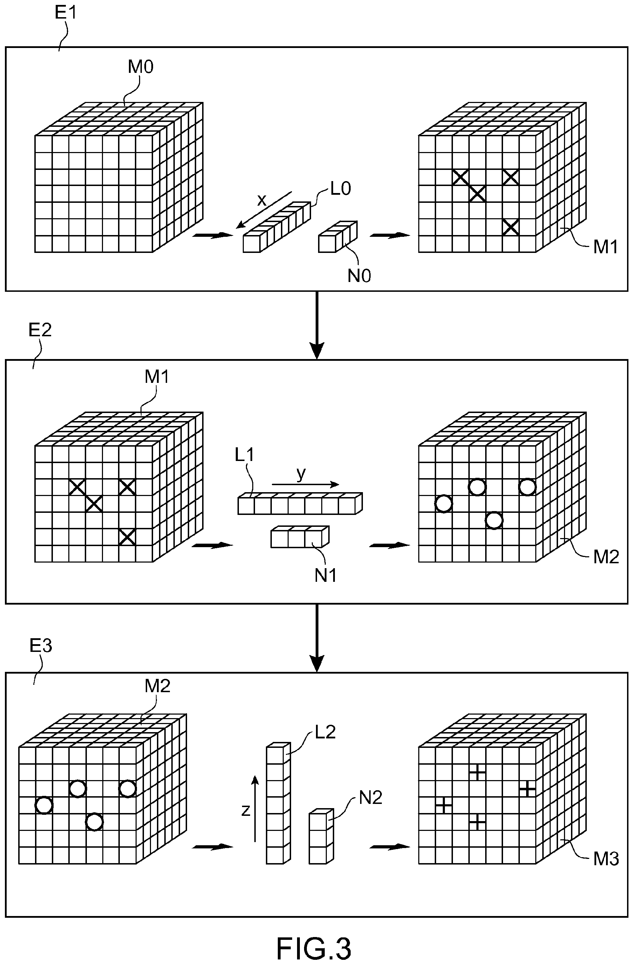

La Fig. 3 illustre de manière schématique les étapes de convolution, selon un mode de réalisation préféré de l'invention.

A l'étape E1, le calculateur 9 est configuré pour extraire chaque ligne de la représentation matricielle initiale suivant une première direction (par exemple l'axe x). On obtient ainsi pour chaque ligne L0 un signal unidimensionnel que l'on va convoluer avec le noyau de convolution N0 suivant cette première direction. Les résultats de la convolution sur toutes les lignes forment ainsi une première représentation matricielle intermédiaire M1. Avantageusement, lors de la convolution le support du signal sur chaque ligne n'est pas modifié.

En outre, la convolution d'une ligne avec un noyau moyenneur est calculée en un temps qui est indépendant de la taille du noyau, ceci grâce au fait qu'on additionne le voxel entrant dans le noyau et on soustrait celui sortant du noyau pour avoir à chaque position du noyau la somme de tous les voxels couvert par ce noyau.

A partir du résultat obtenu à l'étape précédente, on réalise la même opération suivant une autre direction indépendante. En effet, à l'étape E2, le calculateur 9 est configuré pour extraire chaque ligne L1 de la première représentation matricielle intermédiaire M1 suivant une deuxième direction (par exemple l'axe y) pour la convoluer avec le noyau de convolution N1 suivant cette deuxième direction formant ainsi une deuxième représentation matricielle intermédiaire M2.

Enfin, à l'étape E3, le calculateur 9 est configuré pour extraire chaque ligne L2 de la deuxième représentation matricielle intermédiaire M2 suivant la troisième direction non encore traitée (l'axe z) pour la convoluer avec le noyau de convolution N2 suivant cette troisième direction formant ainsi la représentation matricielle résultante M3.

Avantageusement, le noyau de convolution est un noyau moyenneur pondérant chaque coefficient d'une manière identique. Le noyau de convolution peut ainsi correspondre à un volume de référence parallélépipédique de nxmxp voxels avec n, m, p des entiers par exemple de quelques unités à quelques dizaines d'unités.

En outre, selon un aspect avantageux de la présente invention, chaque représentation matricielle courante (i.e., la première représentation M1, la deuxième représentation M2, et la représentation résultante M3) est construite en remplaçant les coefficients de la représentation matricielle précédente par des coefficients courants. Dans ce cas on utilise une ligne tampon pour calculer la convolution monodimensionnelle selon chaque direction.

Par ailleurs, les opérations d'extraction et de convolution sur les différentes lignes de chaque représentation matricielle M0, M1, M2 sont avantageusement parallélisées. En effet, la décomposition de la convolution suivant des directions indépendantes permet de réaliser des calculs simultanés sur les différentes lignes de chaque représentation et par conséquent d'exploiter pleinement la puissance du calculateur 9. On notera que la synchronisation entre les unités de calcul est très discrète et non bloquante puisqu'il suffit de synchroniser l'ensemble de ces unités de calcul, uniquement à la fin de chaque étape.

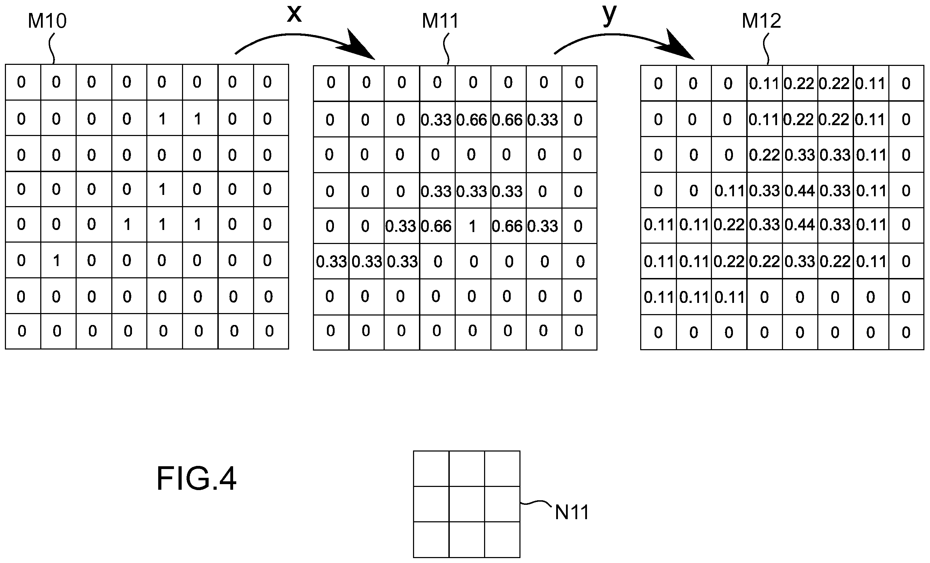

La Fig. 4 est un exemple relatif à une image bidimensionnelle illustrant le principe de convolution, selon l'invention.

Par un souci de simplification, cet exemple se rapporte à une image surfacique, mais le principe reste le même pour une image volumique.

Au départ, on associe à l'image une matrice initiale M10 à coefficients aᵢⱼ binaires avec i le numéro de la ligne et j le numéro de la colonne. La valeur « 1 » d'un coefficient correspond à la phase dont on souhaite mesurer la densité volumique et par opposition la valeur « 0 » correspond à une absence de cette phase.

La première étape consiste à extraire chaque ligne de la matrice initiale suivant l'axe x pour la convoluer avec un noyau de convolution correspondant à une surface de référence prédéterminée suivant cet axe. Selon cet exemple, le noyau de convolution N11 est une matrice carrée 3x3 correspondant à un carré de référence de 9 pixels. On suppose que le noyau de convolution N11 est un noyau moyenneur permettant de faire la moyenne de chaque coefficient avec ses premiers voisins. Les résultats de la convolution sur toutes les lignes selon l'axe x forment une matrice intermédiaire.

Par exemple, sur la deuxième ligne de la matrice initiale M10, la valeur du coefficient a₂₄ est 0 (a₂₄=0) et les coefficients voisins sur la même ligne ont les valeurs 0 et 1 (a₂₃=0 et a₂₅=1). La moyenne entre les trois coefficients a₂₃, a₂₄ et a₂₅ est alors 0,33. De même, la moyenne entre les coefficients a₂₄, a₂₅ et a₂₆ est 0,66. Ainsi, pour former la matrice intermédiaire M11, on attribue les nouvelles valeurs courantes aux coefficients de la matrice. Par exemple, on remplace les valeurs initiales 0 et 1 des coefficients a₂₄ et a₂₅ par les valeurs intermédiaires 0,33 et 0,66 (a₂₄=0,33 et a₂₅=0,66).

A partir de la matrice intermédiaire M11 obtenue précédemment, on réalise les mêmes opérations suivant l'axe y (i.e. suivant les colonnes de la matrice) avec le même noyau de convolution N11. Par exemple, sur la quatrième colonne de la matrice intermédiaire, la valeur du coefficient a₂₄ est 0,33 (a₂₄=0,33) et les coefficients voisins sur la même colonne ont les valeurs 0 et 0 (a₁₄=0 et a₃₄=0). La moyenne entre les trois coefficients a₁₄, a₂₄ et a₃₄ est alors 0,11. Dans la matrice résultante M12, on remplace par exemple la valeur intermédiaire 0,33 du coefficient a₂₄ par la valeur résultante 0,11 (a₂₄=0,11). Les valeurs des coefficients de la matrice résultante M12 correspondent alors aux densités de la phase que l'on souhaite caractériser.

Le procédé de la présente invention permet de réduire le temps de calcul du taux volumique d'une phase dans un medium solide par plusieurs ordres de grandeurs (jusqu'à 4 ordres de grandeur) par rapport à l'état de l'art.

En effet, pour une image volumique de taille 827x2024x1800 voxels et un volume de référence de 41x41x41 voxels, le temps de calcul selon la méthode de la présente invention est de seulement 40 secondes tandis que la méthode proposée par un logiciel commercial nécessitait un temps de calcul de 5h20min (19200 secondes). Ainsi, le temps de calcul a été réduit par un facteur de 450 par rapport à l'état de l'art.

Le procédé de la présente invention est utilisé pour des contrôles en production dans le domaine aéronautique et en particulier pour mesurer la densité volumique d'une phase spécifique dans une pièce d'un moteur d'aéronef.

## Revendications

1. Procédé de mesure non intrusive de la densité volumique d'une phase spécifique dans une pièce (11) d'un moteur d'aéronef, **caractérisé en ce qu'**il comporte les étapes suivantes mises en oeuvre par un calculateur (9) compris dans un système de tomographie :
- former une série d'images radiographiques (15) correspondant à une série de projections de ladite pièce (11),
- réaliser une image volumique (17) de ladite pièce à partir de ladite série de projections, ladite image étant formée par une grille tridimensionnelle de voxels dont les valeurs indiquent la disposition de ladite phase spécifique dans ladite pièce,
- associer un coefficient binaire à chaque voxel de ladite image volumique (17) construisant ainsi une représentation matricielle tridimensionnelle initiale (M0) de coefficients binaires, lesdits coefficients binaires étant représentatifs d'une présence ou absence de ladite phase spécifique dans des zones de ladite pièce correspondant aux voxels, **caractérisé par** l'étape suivante mise en oeuvre par le calculateur compris dans le système de tomographie:
- convoluer ladite représentation matricielle initiale (M0) avec un noyau matriciel de convolution correspondant à un volume de référence (21) prédéterminé, ladite convolution étant réalisée en opérant une composition de trois convolutions monodimensionnelles suivant trois directions indépendantes formant ainsi une représentation matricielle résultante (M3) dont chaque coefficient résultant représente un taux volumique de ladite phase spécifique dans ledit volume de référence.

2. Procédé selon la revendication 1, **caractérisé en ce que** la convolution de ladite représentation matricielle initiale comporte les étapes suivantes :
- extraire chaque ligne de ladite représentation matricielle initiale suivant une première direction pour la convoluer avec ledit noyau de convolution suivant ladite première direction formant ainsi une première représentation matricielle intermédiaire,
- extraire chaque ligne de ladite première représentation matricielle intermédiaire suivant une deuxième direction pour la convoluer avec ledit noyau de convolution suivant ladite deuxième direction formant ainsi une deuxième représentation matricielle intermédiaire, et
- extraire chaque ligne de ladite deuxième représentation matricielle intermédiaire suivant une troisième direction pour la convoluer avec ledit noyau de convolution suivant ladite troisième direction formant ainsi ladite représentation matricielle résultante.

3. Procédé selon la revendication 2, **caractérisé en ce qu'**il comporte une parallélisation des opérations d'extraction et de convolution sur les différentes lignes de chaque représentation matricielle.

4. Procédé selon la revendication 2 ou 3, **caractérisé en ce que** chaque représentation matricielle courante parmi les représentations intermédiaires et résultante est construite en remplaçant les coefficients de la représentation matricielle précédente par des coefficients courants.

5. Procédé selon l'une quelconque des revendications précédentes, **caractérisé en ce que** le noyau de convolution est un noyau moyenneur pondérant chaque coefficient d'une manière identique.

6. Procédé selon l'une quelconque des revendications précédentes, **caractérisé en ce que** le noyau de convolution correspond à un volume de référence parallélépipédique.

7. Système de mesure non intrusive de la densité volumique d'une phase spécifique dans une pièce (11) d'un moteur d'aéronef, **caractérisé en ce qu'**il comporte :
- un détecteur (7) configuré pour former une série d'images radiographiques (15) correspondant à une série de projections de ladite pièce (11), et
- un calculateur (9) compris dans un système de tomographie, le calculateur configuré pour :
réaliser une image volumique (17) de ladite pièce (11) à partir de ladite série de projections, ladite image étant formée par une grille tridimensionnelle de voxels dont les valeurs indiquent la disposition de ladite phase spécifique dans ladite pièce,
associer un coefficient binaire à chaque voxel de ladite image volumique construisant ainsi une représentation matricielle tridimensionnelle initiale (M0) de coefficients binaires, lesdits coefficients binaires étant représentatifs d'une présence ou absence de ladite phase spécifique dans des zones de ladite pièce correspondant aux voxels, et **caractérisé en ce que** le calculateur est configuré pour
convoluer ladite représentation matricielle initiale avec un noyau matriciel de convolution correspondant à un volume de référence (21) prédéterminé, ladite convolution étant réalisée en opérant une composition de trois convolutions monodimensionnelles suivant trois directions indépendantes formant ainsi une représentation matricielle résultante (M3) dont chaque coefficient résultant représente un taux volumique de ladite phase spécifique dans ledit volume de référence.

8. Système selon la revendication 7, **caractérisé en ce que** le calculateur est configuré pour :
extraire chaque ligne de ladite représentation matricielle initiale suivant une première direction pour la convoluer avec ledit noyau de convolution suivant ladite première direction formant ainsi une première représentation matricielle intermédiaire,
extraire chaque ligne de ladite première représentation matricielle intermédiaire suivant une deuxième direction pour la convoluer avec ledit noyau de convolution suivant ladite deuxième direction formant ainsi une deuxième représentation matricielle intermédiaire, et
extraire chaque ligne de ladite deuxième représentation matricielle intermédiaire suivant une troisième direction pour la convoluer avec ledit noyau de convolution suivant ladite troisième direction formant ainsi ladite représentation matricielle résultante.

9. Système selon la revendication 8, **caractérisé en ce que** le calculateur est configuré pour paralléliser des opérations d'extraction et de convolution sur les différentes lignes de chaque représentation matricielle.

## Patentansprüche

1. Verfahren zur nicht-invasiven Messung der Volumendichte einer spezifischen Phase in einem Teil (11) eines Flugzeugtriebwerks, **dadurch gekennzeichnet, dass** es die folgenden Schritte aufweist, die von einem Rechner (9) ausgeführt werden, der in einem Tomographiesystem enthalten ist:
- Ausbilden einer Reihe von Röntgenbildern (15), die einer Reihe von Projektionen des Teils (11) entsprechen,
- Ausbilden eines Volumenbilds (17) des Teils aus der Reihe von Projektionen, wobei das Bild durch ein dreidimensionales Gitter von Voxeln gebildet wird, deren Werte die Anordnung der spezifischen Phase in dem Teil angeben,
- Zuordnen eines binären Koeffizienten zu jedem Voxel des Volumenbildes (17), wodurch eine anfängliche dreidimensionale Matrixdarstellung (M0) von binären Koeffizienten konstruiert wird, wobei die binären Koeffizienten für ein Vorhandensein oder Fehlen der spezifischen Phase in Bereichen des Teils, die den Voxeln entsprechen, repräsentativ sind, **gekennzeichnet durch** den folgenden Schritt, der von dem in dem Tomographiesystem enthaltenen Rechner durchgeführt wird:
- Falten der ursprünglichen Matrixdarstellung (M0) mit einem Faltungsmatrixkern, der einem vorbestimmten Referenzvolumen (21) entspricht, wobei die Faltung durch Ausführen einer Zusammensetzung von drei eindimensionalen Faltungen in drei unabhängigen Richtungen erfolgt, wodurch eine resultierende Matrixdarstellung (M3) ausgebildet wird, bei der jeder resultierende Koeffizient einen Volumenanteil der spezifischen Phase in dem Referenzvolumen darstellt.

2. Verfahren nach Anspruch 1, **dadurch gekennzeichnet, dass** die Faltung der ursprünglichen Matrixdarstellung die folgenden Schritte aufweist:
- Extrahieren jeder Zeile der anfänglichen Matrixdarstellung entlang einer ersten Richtung, um sie mit dem Faltungskern entlang der ersten Richtung zu falten, wodurch eine erste Zwischenmatrixdarstellung ausgebildet wird,
- Extrahieren jeder Zeile der ersten Zwischenmatrixdarstellung entlang einer zweiten Richtung, um sie mit dem Faltungs-Kernel entlang der zweiten Richtung zu falten, wodurch eine zweite Zwischenmatrixdarstellung ausgebildet wird, und
- Extrahieren jeder Zeile der zweiten Zwischenmatrixdarstellung in einer dritten Richtung, um sie mit dem Faltungskern in der dritten Richtung zu falten, wodurch die resultierende Matrixdarstellung ausgebildet wird.

3. Verfahren nach Anspruch 2, **dadurch gekennzeichnet, dass** es eine Parallelisierung der Extraktions- und Faltungsoperationen auf den verschiedenen Zeilen jeder Matrixdarstellung aufweist.

4. Verfahren nach Anspruch 2 oder 3, **dadurch gekennzeichnet, dass** jede momentane Matrixdarstellung unter den Zwischen- und Ergebnisdarstellungen durch Ersetzen der Koeffizienten der vorherigen Matrixdarstellung durch momentane Koeffizienten konstruiert wird.

5. Verfahren nach einem der vorhergehenden Ansprüche, **dadurch gekennzeichnet, dass** der Faltungskern ein Mittelwertbildungskern ist, der jeden Koeffizienten gleich gewichtet.

6. Verfahren nach einem der vorhergehenden Ansprüche, **dadurch gekennzeichnet, dass** der Faltungskern einem quaderförmigen Referenzvolumen entspricht.

7. System zur nicht-invasiven Messung der Volumendichte einer spezifischen Phase in einem Teil (11) eines Luftfahrzeugmotors, **dadurch gekennzeichnet, dass** es folgendes aufweist:
- einen Detektor (7), der ausgebildet ist, um eine Reihe von Röntgenbildern (15) auszubilden, die einer Reihe von Projektionen des Teils (11) entsprechen, und
- einen Rechner (9), der in einem Tomographiesystem enthalten ist, wobei der Rechner konfiguriert ist, um:
ein Volumenbild (17) des Teils (11) ausgehend von der Reihe von Projektionen auszubilden, wobei das Bild durch ein dreidimensionales Gitter von Voxeln ausgebildet wird, deren Werte die Anordnung der spezifischen Phase in dem Teil angeben,
jedem Voxel des Volumenbildes einen binären Koeffizienten zuzuordnen, wodurch eine anfängliche dreidimensionale Matrixdarstellung (M0) von binären Koeffizienten konstruiert wird, wobei die binären Koeffizienten für ein Vorhandensein oder Fehlen der spezifischen Phase in den den Voxeln entsprechenden Bereichen des Teils repräsentativ sind, und **dadurch gekennzeichnet, dass** der Rechner konfiguriert ist, um
die ursprüngliche Matrixdarstellung mit einem Faltungsmatrixkern zu falten, der einem vorbestimmten Referenzvolumen (21) entspricht, wobei die Faltung durchgeführt wird, indem eine Zusammensetzung von drei eindimensionalen Faltungen in drei unabhängigen Richtungen vorgenommen wird, wodurch eine resultierende Matrixdarstellung (M3) ausgebildet wird, bei der jeder resultierende Koeffizient einen Volumenanteil der spezifischen Phase in dem Referenzvolumen darstellt.

8. System nach Anspruch 7, **dadurch gekennzeichnet, dass**
der Rechner derart konfiguriert ist, dass er:
jede Zeile der ursprünglichen Matrixdarstellung entlang einer ersten Richtung extrahiert, um sie mit dem Faltungskern entlang der ersten Richtung zu falten, wodurch eine erste Zwischenmatrixdarstellung ausgebildet wird,
jede Zeile der ersten Zwischenmatrixdarstellung entlang einer zweiten Richtung extrahiert, um sie mit dem Faltungskern entlang der zweiten Richtung zu falten, wodurch eine zweite Zwischenmatrixdarstellung ausgebildet wird, und
jeder Zeile der zweiten Zwischenmatrixdarstellung entlang einer dritten Richtung extrahiert, um sie mit dem Faltungskern entlang der dritten Richtung zu falten, wodurch die resultierende Matrixdarstellung ausgebildet wird.

9. System nach Anspruch 8, **dadurch gekennzeichnet, dass** der Rechner derart konfiguriert ist, dass er Extraktions- und Faltungsoperationen auf den verschiedenen Zeilen jeder Matrixdarstellung parallelisiert.

## Claims

1. Method for the non-intrusive measurement of the volume density of a specific phase in a part (11) of an aircraft engine, **characterised in that** it comprises the following steps implemented by processing means (9) comprised in a tomography system:
- forming a series of radiographic images (15) corresponding to a series of projections of said part (11),
- producing a volume image (17) of said part formed from said series of projections, said image being formed by a three-dimensional grid of voxels, the values of which indicate the disposition of said specific phase in said part,
- associating a binary coefficient with each voxel of said volume image (17), thus constructing an initial three-dimensional matrix representation (M0)of binary coefficients, said binary coefficients representing a presence or absence of said specific phase in zones of said part corresponding to the voxels, **characterized by** the following step implemented by the processing means comprised in the tomographic system:
- convoluting said initial matrix representation (M0) with a convolution matrix kernel corresponding to a predetermined reference volume (21), said convolution being performed by effecting a composition of three monodimensional convolutions in three independent directions, thus forming a resultant matrix representation (M3), each resultant coefficient of which represents a volume ratio of said specific phase in said reference volume.

2. Method according to claim 1, **characterised in that** the convolution of said initial matrix representation comprises the following steps:
- extracting each row of said initial matrix representation in a first direction in order to convolute it with said convolution kernel in said first direction, thus forming a first intermediate matrix representation,
- extracting each row of said first intermediate matrix representation in a second direction in order to convolute it with said convolution kernel in said second direction, thus forming a second intermediate matrix representation, and
- extracting each row of said second intermediate matrix representation in a third direction in order to convolute it with said convolution kernel in said third direction, thus forming said resultant matrix representation.

3. Method according to claim 2, **characterised in that** it comprises a parallelisation of the extraction and convolution operations on the various rows of each matrix representation.

4. Method according to claim 2 or 3, **characterised in that** each current matrix representation among the intermediate and resultant representations is constructed by replacing the coefficients of the previous matrix representation by current coefficients.

5. Method according to any one of the preceding claims, **characterised in that** the convolution kernel is an averaging kernel weighting each coefficient identically.

6. Method according to any one of the preceding claims, **characterised in that** the convolution kernel corresponds to a parallelepipedal reference volume,

7. System for non-intrusive measurement of the volume density of a specific phase in a part (11) of an aircraft engine, **characterised in that** it comprises:
- a detector (7) configured to form a series of radiographic images (15) corresponding to a series of projections of said part (11) and
- processing means (9) comprised in a tomographic system, the processing means being configured for:
producing a volume image (17) of said part (11) from said series of images, said image being formed by a three-dimensional grid of voxels, the values of which indicate the disposition of said specific phase in said part,
associating a binary coefficient with each voxel of said volume image, thus constructing an initial three-dimensional matrix representation (M0) of binary coefficients, said binary coefficients representing a presence or absence of said specific phase in zones of said part corresponding to the voxels, and
**characterized in that** the processing means is configured for convoluting said initial matrix representation with a convolution matrix kernel corresponding to a predetermined reference volume, said convolution being performed by effecting a composition of three monodimensional convolutions in three independent directions, thus forming a resultant matrix representation (M3), each resultant coefficient of which represents a volume ratio of said specific phase in said reference volume.

8. System according to claim 7, **characterised in that** the processing means is configured for:
extracting each row of said initial matrix representation in a first direction in order to convolute it with said convolution kernel in said first direction, thus forming a first intermediate matrix representation,
extracting each row of said first intermediate matrix representation in a second direction in order to convolute it with said convolution kernel in said second direction, thus forming a second intermediate matrix representation, and
extracting each row of said second intermediate matrix representation in a third direction in order to convolute it with said convolution kernel in said third direction, thus forming said resultant matrix representation.

9. System according to claim 8, **characterised in that** the processing means are configured so as to parallelise extraction and convolution operations on the various rows of each matrix representation.
